# EUROPEAN PATENT SPECIFICATION

(11) **EP 1 514 468 B1**
(45) Date of publication and mention of the grant of the patent: **13.09.2006**
(21) Application number: 04077117.2
(22) Date of filing: 22.07.2004
(51) Int. Cl.: A01J 5/017, A01J 5/007, A01J 7/00

(54) **A method of milking an animal and a device for applying said method**
Verfahren für das Melken eines Tiers, und Vorrichtung für diesen Zweck
Méthode de traite d'un animal, et appareil à cet effet

(30) Priority: 15.09.2003 NL 1024296
(43) Date of publication of application: 16.03.2005
(73) Proprietor: Lely Enterprises AG, 6300 ZUG (CH)
(72) Inventor: Van der Berg, Karel, 2971 BR Bleskensgraaf (NL); Meijer, Eduard Lodewijk, 2514 HL Den Haag (NL)
(74) Representative: Corten, Maurice Jean F.M.

(56) References cited:
- EP-A- 1 279 326
- WO-A-98/37756
- WO-A-03/055296
- US-A- 4 306 590

## Description

The invention relates to a method of milking an animal according to the preamble of claim 1.

Such a method is known, see e.g. document EP-A-1 279 326. Such a method of milking has the disadvantage of being unpleasant to certain animals. The invention aims at providing an animal-friendly method of milking animals. According to a first aspect of the invention, when the milk-drawing step has ended the milking vacuum is lowered by air flowing into the teat cup. However, even before the milking vacuum has completely been removed a drawing force is exerted on the teat cup. The vacuum that is still present in the teat cup also exerts a drawing force on the teat of the animal via the teat cup. This may be experienced as unpleasant by sensitive animals.

There is therefore a waiting time which is adjustable per animal. This makes it possible to set a longer waiting time for sensitive animals, so that more air can flow into the teat cup before the teat cup is withdrawn. As a result thereof the teat cup can be drawn from the teat under a lower vacuum.

According to a favourable embodiment the waiting time is set depending on to which teat of the animal the teat cup has been connected. An individual teat of an animal may require a different treatment in comparison with the other teats, for example as a result of a mastitis infection in the relevant quarter.

According to a second aspect of the invention the waiting time is set depending on a teat parameter. The shape of a teat influences the speed at which the vacuum in the teat cup falls when the teat cup is disconnected. For example, a teat having a small diameter will cause more air to leak along the teat to the teat space and will consequently cause the vacuum to fall more quickly. On the contrary, a long teat will occupy relatively much volume in the teat space so that the vacuum will fall quickly with relatively little air being present.

A further embodiment of the method is obtained by measuring the teat parameter by means of a teat meter. The shape of the teat is not fixed and may change in the course of time. The time elapsed since the last milking as well as the stage of lactation influence the shape of the teat. By measuring the teat parameter it is possible to work with the correct, momentary teat parameter.

In a favourable embodiment the teat detector for determining the position of a teat during the connection step is the teat meter. The data obtained during the determination of the position of a teat comprise data in relation to the shape of the teat. By using these data a separate teat meter is not necessary.

In a further embodiment of the method the vacuum level in the teat space is measured during the milk-drawing step and the waiting time is set depending on said vacuum level. The vacuum level in the teat cup depends inter alia on the level of the vacuum applied by the vacuum source and on the amount of leaking air that penetrates along the teat into the teat space. Therefore, taking the applied milking vacuum into account, the vacuum level in the teat space can be a measure for the amount of leaking air and consequently a measure for the extent to which the vacuum decreases during the disconnection step.

In another embodiment of the method the amount of air displaced in the pulsation space is measured during the milk-drawing step and the waiting time is set depending on said amount. Said amount is determined inter alia by the size and the thickness of the teat that is present in the teat space.

In a particular embodiment the measurement takes place during the main milking phase. The main milking phase is the phase in which the milk flow is more or less constant during drawing milk from the animal. Therefore, the main milking phase provides the best conditions for a representative measurement.

In order to save time it is advantageous if the measurement takes place during a previous milking and the measurement data obtained are stored in a memory. In this manner no time need be spent on a measurement.

The invention further relates to a milking device for applying the method. Favourable embodiments are mentioned in the relevant sub-claims.

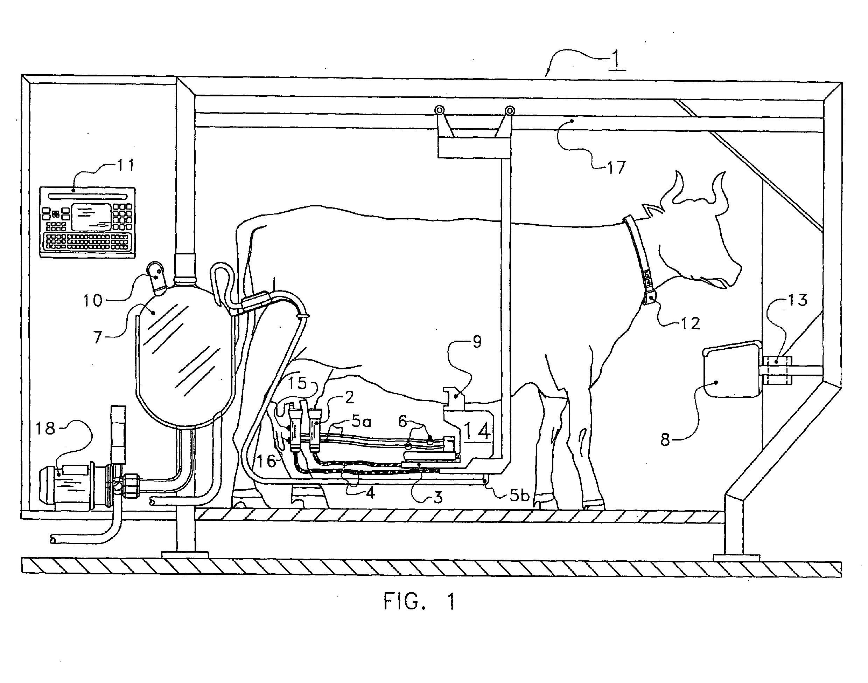

The invention will be explained hereinafter in further detail with reference to an embodiment of the milking device according to the invention shown in Figure 1.

Figure 1 shows a milking device 1 provided with a robot 14 for automatically connecting at least one teat cup 2 to a teat of an animal, which teat cup 2 comprises a teat space for containing a teat and a pulsation space for applying a milking motion by means of a pulsating pulsation vacuum, with a vacuum source 10 for applying a milking vacuum to the teat space, with a drawing-away device 3 for drawing away the teat cup 2 from the animal, with a vacuum-lowering device for lowering the milking vacuum, with a computer 11 for controlling the device 1, with a clock for determining a waiting time for activating the drawing-away device 3 after the milking vacuum has been lowered and with an automatic animal recognition device 13 for emitting an animal recognition signal to the computer 11, characterized in that the waiting time is adjustable on the basis of the animal recognition signal.

The milking device comprises an animal area to which the animal to be milked (here depicted as a cow) has access by means of non-shown entrance doors. There is provided a robot for automatically connecting teat cups to the teats of the animal. To this end a teat position meter 9 is fitted to the robot 14 for determining the position of a teat. Said meter is depicted as a scanning laser but may comprise any type of position-determining sensor. For the purpose of following the movements of the cow in the longitudinal direction the robot is suspended from a rail. The animal recognition device 13 comprises a transponder 12 fitted to the cow and a transmitter/receiver that is fixedly attached to the milking device 1. The transponder 12 is designed to transmit a unique signal by means of which an individual cow can be recognized. Two of the four teat cups are depicted, said two teats being connected to two of the four teats of the cow. The teats are present in the teat spaces of the relevant teat cups 2. Each teat space is connected to the milk glass 7 via a milk tube 5a, 5b. Transport of milk from the teat cup 2 to the milk glass 7 takes place owing to the fact that there is a milking vacuum in said milk glass 7. Said milk glass 7 serves for temporary storage of milk and for separating the air/milk mixture. The vacuum is generated by a vacuum pump fitted to the vacuum source 10. There is provided a milk pump 18 for conveying by pumping the drawn milk for further milk processing. For the purpose of supplying feed in the milking device there is further disposed a manger. The components of the milking device are controlled by the computer 11.

To each teat cup 2 there is attached a teat meter for determining the length of the teat. Said teat meter is designed as a series of contactless proximity sensors. The teat position meter 9 scans the teats during the connection step. The scan data may be used by the computer 11 for determining a teat parameter, such as the length or the diameter of the teat. Besides, in the teat space of each teat cup 2 there is disposed a vacuum sensor 16 for detecting the vacuum level in the teat space. The vacuum sensor 16 is disposed in such a way that it cannot come into contact with a teat.

The operation of the milking device 1 is as follows. A cow reports at the milking device 1 and is identified. The animal recognition signal is passed to the computer 11 and the latter decides on the basis of known criteria whether the cow should be milked. The entrance door is opened and the connection step is performed. Said step comprises in a known manner successively cleaning of the teats, determination of the position of the teats and connection of the teat cups 2 by the robot 14 on the basis of the position of the teats. The determination of the position of the teats takes place via a scanning laser beam. With the aid of said beam the length and the diameter of the teats are also determined. Then the milk-drawing step, the milking proper, is performed. To this end a pulsating vacuum is applied to the pulsation space, which pulsating vacuum exerts a squeezing motion on the teat. The amount of air that is required for each pulsation motion is a measure for the shape of the teat. By means of a volume meter that is present in the pulse line said air is measured and the measurement result is passed to the computer 11. In case of a thin teat there is required relatively much pulsation air for this purpose. By means of a sensor in the teat space the milking vacuum is also measured. Said milking vacuum is compared with the measured vacuum of the vacuum source 10. A great difference is an indication of much leaking air along the teat.

In general there may be distinguished different phases in drawing milk from an animal. There is a start-up phase with increasing milk flow, a main milking phase in which the milk flow is more or less constant, and a final phase with decreasing milk flow when the udder is almost empty. On the basis of the data from the (non-shown) milk flow meter the computer 11 can determine in which phase the milk-drawing is. If this is the main milking phase the measured pulsation amount and the measured milking vacuum are considered as relevant.

The obtained measurement data are stored in the memory of the computer 11 and are used for future milkings.

If the milk flow has fallen below a particular value the disconnection-preparing step begins. The milking vacuum is stopped by shutting the valve in the milk tube. The valve may be designed as a controlled valve, so that by means of this the milking vacuum can fall in a controlled manner via a particular curve. To this end the data from the vacuum sensor 16 in the teat space may be used.

Subsequently a particular waiting time is determined. Said waiting time may be predetermined for a particular animal or group of animals, for example animals of a particular age, and be inputted manually into the memory of the computer 11. The waiting time may also be determined by the computer 11 itself. Then a short waiting time is determined in case of a relatively great difference between the measured milking vacuum and the source vacuum, in case of a great pulsation volume or in case of a teat having a small diameter.

After the waiting time has elapsed the disconnection step begins. The latter step serves for disconnecting the teat cups 2 from the teats. In the figure shown this takes place actively by pulling the teat cups 2 towards the robot arm via the cords 4. Each cord 4 is attached to a separately operable (non-shown) drawing-back cylinder.

In a non-shown embodiment and not according to the invention, the disconnection step is carried out by the cow herself. In this case the (non-shown) exit door of the milking device is opened by the computer 11 after the waiting time has elapsed, so that the cow can leave the milking device 1. When leaving the milking device 1 the cow loosens herself the teat cups 2 that are still connected to her teats. This may take place, if desired, in combination with the active withdrawal of the teat cups 2 by the robot 14. If the cow leaves the milking device 1 insufficiently quickly, a (non-shown) driving-out device may still be activated, if desired.

## Claims

1. A method of milking an animal by means of a milking device (1) provided with at least one teat cup (2) having a pulsation space and a teat space, which method comprises successively a connection step, a milk-drawing step, a disconnection-preparing step and a disconnection step, a pulsating pulsation vacuum being present in the pulsation space and a milking vacuum being present in the teat space during the milk-drawing step, the disconnection step following after a particular waiting time, said waiting time in the disconnection-preparing step being adjustable per animal, **characterized in that** the milking vacuum is lowered during the disconnection-preparing step, and **in that** the waiting time is set depending on a teat parameter.

2. A method as claimed in claim 1, **characterized in that** the waiting time is set depending on to which teat of the animal the teat cup (2) has been connected.

3. A method as claimed in claim 1 or 2, **characterized in that** the teat parameter is the teat diameter.

4. A method as claimed in claim 1 or 2, **characterized in that** the teat parameter is the length of the teat.

5. A method as claimed in any one of the preceding claims, **characterized in that** the teat parameter is measured by means of a teat meter.

6. A method as claimed in claim 5, **characterized in that** the teat detector for determining the position of a teat during the connection step is the teat meter.

7. A method as claimed in any one of the preceding claims, **characterized in that** the vacuum level in the teat space is measured during the milk-drawing step, and **in that** the waiting time is set depending on said vacuum level.

8. A method as claimed in any one of the preceding claims, **characterized in that** the amount of air displaced in the pulsation space is measured during the milk-drawing step, and **in that** the waiting time is set depending on said amount.

9. A method as claimed in claim 7 or 8, **characterized in that** the measurement takes place during the main milking phase.

10. A method as claimed in any one of claims 3 to 9, **characterized in that** the measurement takes place during a previous milking, and **in that** the measurement data obtained are stored in a memory.

11. A milking device (1) provided with a robot (14) for automatically connecting at least one teat cup (2) to a teat of an animal, which teat cup (2) comprises a teat space for containing a teat and a pulsation space for applying a milking motion by means of a pulsating pulsation vacuum, with a vacuum source (10) for applying a milking vacuum to the teat space, with a drawing-away device (3) for drawing away the teat cup (2) from the animal, with a computer (11) for controlling the device, with a dock for determining a waiting time for activating the drawing-away device (3) and with an automatic animal recognition device for emitting an animal recognition signal to the computer (11), said waiting time being adjustable, **characterized in that** the device comprises a vacuum-lowering device for lowering the milking vacuum, **in that** said clock determining the waiting time after the milking vacuum has been lowered, **in that** there are provided means for setting the waiting time in dependence on a teat parameter and on the basis of the animal recognition signal

12. A milking device (1) as claimed in claim 11, **characterized in that** there are provided means for determining to which teat of the animal the teat cup (2) has been connected, and **in that** there are provided means for setting the waiting time in dependence on to which teat the teat cup (2) has been connected.

13. A milking device (1) as claimed in claim 11 or 12, **characterized in that** the device comprises a teat meter for determining a teat parameter.

14. A milking device (1) as claimed in claim 13, **characterized in that** the teat meter is suitable for determining the teat diameter.

15. A milking device (1) as claimed in claim 13, **characterized in that** the teat meter is suitable for determining the length of the teat.

16. A milking device (1) as claimed in claim 13, 14 or 15, **characterized in that** the device comprises a teat position meter (9) for determining the position of a teat, and **in that** the teat meter is the teat position meter (9).

17. A milking device (1) as claimed in any one of the claims 11 to 16. **characterized in that** the device comprises a vacuum sensor (16) for detecting the vacuum level in the teat space.

18. A milking device (1) as claimed in any one of the claims 11 to 17, **characterized in that** the device comprises an air sensor (15) for determining the displaced air in the pulsation space.

19. A milking device (1) as claimed in any one of the claims 11 to 18, **characterized in that** the computer (11) comprises a memory for storing historical measurement data from the teat meter and/or the vacuum sensor (16) and/or the air sensor (15).

## Patentansprüche

1. Verfahren zum Melken eines Tieres mit Hilfe einer Melkvorrichtung (1), die mit mindestens einem Zitzenbecher (2) versehen ist, der einen Pulsierraum und einen Zitzenraum aufweist, wobei das Verfahren nacheinander einen Verfahrensschritt des Anschließens, einen Verfahrensschritt des Milchentnehmens, einen Verfahrensschritt des Vorbereitens des Abnehmens und einen Verfahrensschritt des Abnehmens umfaßt, wobei während des Verfahrensschrittes des Milchentnehmens ein pulsierendes Pulsationsvakuum in dem Pulsierraum und ein Melkvakuum in dem Zitzenraum vorhanden sind, wobei der Verfahrensschritt des Abnehmens nach einer bestimmten Wartezeit durchgeführt wird, wobei diese Wartezeit bei dem Verfahrensschritt des Vorbereitens des Abnehmens für jedes Tier einstellbar ist,
**dadurch gekennzeichnet, daß** das Melkvakuum während des Verfahrensschrittes des Vorbereitens des Abnehmens gesenkt wird, und daß die Wartezeit in Abhängigkeit von einem Zitzenparameter eingestellt wird.

2. Verfahren nach Anspruch 1,
**dadurch gekennzeichnet, daß** die Wartezeit in Abhängigkeit davon eingestellt wird, an welche Zitze des Tieres der Zitzenbecher (2) angeschlossen worden ist.

3. Verfahren nach Anspruch 1 oder 2,
**dadurch gekennzeichnet, daß** der Zitzenparameter der Zitzendurchmesser ist.

4. Verfahren nach Anspruch 1 oder 2,
**dadurch gekennzeichnet, daß** der Zitzenparameter die Länge der Zitze ist.

5. Verfahren nach einem der vorhergehenden Ansprüche,
**dadurch gekennzeichnet, daß** der Zitzenparameter mittels eines Zitzenmeßgerätes gemessen wird.

6. Verfahren nach Anspruch 5,
**dadurch gekennzeichnet, daß** der Zitzendetektor zur Ermittlung der Position einer Zitze während des Verfahrensschrittes des Anschließens durch das Zitzenmeßgerät gebildet ist.

7. Verfahren nach einem der vorhergehenden Ansprüche,
**dadurch gekennzeichnet, daß** das Vakuumniveau in dem Zitzenraum während des Verfahrensschrittes des Milchentnehmens gemessen wird, und daß die Wartezeit in Abhängigkeit von dem Vakuumniveau eingestellt wird.

8. Verfahren nach einem der vorhergehenden Ansprüche,
**dadurch gekennzeichnet, daß** die Menge der in dem Pulsierraum verlagerten Luft während des Verfahrensschrittes des Milchentnehmens gemessen wird, und daß die Wartezeit in Abhängigkeit von dieser Menge eingestellt wird.

9. Verfahren nach Anspruch 7 oder 8,
**dadurch gekennzeichnet, daß** die Messung während der Hauptmelkphase erfolgt.

10. Verfahren nach einem der Ansprüche 3 bis 9,
**dadurch gekennzeichnet, daß** die Messung während eines vorhergehenden Melkvorganges erfolgt, und daß die gewonnenen Meßdaten in einem Speicher gespeichert werden.

11. Melkvorrichtung (1) mit einem Roboter (14) zum automatischen Anschließen mindestens eines Zitzenbechers (2) an eine Zitze eines Tieres, wobei der Zitzenbecher (2) einen Zitzenraum zur Aufnahme einer Zitze und einen Pulsierraum zur Erzeugung einer Melkbewegung mittels eines pulsierenden Pulsationsvakuums umfaßt, mit einer Vakuumquelle (10) zum Erzeugen eines Melkvakuums in dem Zitzenraum, mit einer Wegziehvorrichtung (3) zum Wegziehen des Zitzenbechers (2) von dem Tier, mit einem Computer (11) zum Steuern der Vorrichtung, mit einer Uhr zum Ermitteln einer Wartezeit zur Aktivierung der Wegziehvorrichtung (3) und mit einer automatischen Tiererkennungsvorrichtung zum Ausgeben eines Tiererkennungssignals an den Computer (11), wobei die Wartezeit einstellbar ist,
**dadurch gekennzeichnet, daß** die Vorrichtung eine Vakuumabsenkvorrichtung zum Absenken des Melkvakuums umfaßt, daß die Uhr die Wartezeit nach Absenken des Melkvakuums ermittelt, und daß eine Vorrichtung zum Einstellen der Wartezeit in Abhängigkeit von einem Zitzenparameter und auf der Basis des Tiererkennungssignals vorhanden ist.

12. Melkvorrichtung (1) nach Anspruch 11,
**dadurch gekennzeichnet, daß** eine Vorrichtung vorhanden ist, die ermittelt, an welche Zitze des Tieres der Zitzenbecher (2) angeschlossen worden ist, und daß eine Vorrichtung vorhanden ist, um die Wartezeit in Abhängigkeit davon einzustellen, an welche Zitze der Zitzenbecher (2) angeschlossen worden ist.

13. Melkvorrichtung (1) nach Anspruch 11 oder 12,
**dadurch gekennzeichnet, daß** die Vorrichtung ein Zitzenmeßgerät zum Ermitteln eines Zitzenparameters umfaßt.

14. Melkvorrichtung (1) nach Anspruch 13,
**dadurch gekennzeichnet, daß** das Zitzenmeßgerät geeignet ist, den Zitzendurchmesser zu ermitteln.

15. Melkvorrichtung (1) nach Anspruch 13,
**dadurch gekennzeichnet, daß** das Zitzenmeßgerät geeignet ist, die Länge der Zitze zu ermitteln.

16. Melkvorrichtung (1) nach Anspruch 13, 14 oder 15,
**dadurch gekennzeichnet, daß** die Vorrichtung ein Zitzenpositions-Meßgerät (9) zum Ermitteln der Position einer Zitze umfaßt, und daß das Zitzenmeßgerät durch das Zitzenpositions-Meßgerät (9) gebildet ist.

17. Melkvorrichtung (1) nach einem der Ansprüche 11 bis 16,
**dadurch gekennzeichnet, daß** die Vorrichtung einen Vakuumsensor (16) zum Ermitteln des Vakuumniveaus in dem Zitzenraum umfaßt.

18. Melkvorrichtung (1) nach einem der Ansprüche 11 bis 17,
**dadurch gekennzeichnet, daß** die Vorrichtung einen Luftsensor (15) zum Ermitteln der in dem Pulsierraum verlagerten Luft umfaßt.

19. Melkvorrichtung (1) nach einem der Ansprüche 11 bis 18,
**dadurch gekennzeichnet, daß** der Computer (11) einen Speicher zum Speichern historischer Meßdaten von dem Zitzenmeßgerät und/oder dem Vakuumsensor (16) und/oder dem Luftsensor (15) umfaßt.

## Revendications

1. Procédé permettant de traire un animal au moyen d'un dispositif de traite (1) muni d'au moins un gobelet trayeur (2) ayant un espace de pulsation et un espace de trayon, lequel procédé comprend successivement une étape de raccordement, une étape de tirage du lait, une étape de préparation de déconnexion et une étape de déconnexion, un vide de pulsation pulsant étant présent dans l'espace de pulsation et un vide de traite étant présent dans l'espace de trayon pendant l'étape de tirage du lait, l'étape de déconnexion venant après un temps d'attente particulier, ledit temps d'attente dans l'étape de préparation de déconnexion étant réglable par animal, **caractérisé en ce que** le vide de traite est réduit pendant l'étape de préparation de déconnexion, et **en ce que** le temps d'attente est déterminé en fonction d'un paramètre de trayon.

2. Procédé selon la revendication 1, **caractérisé en ce que** le temps d'attente est déterminé en fonction du trayon de l'animal sur lequel le gobelet trayeur (2) a été raccordé.

3. Procédé selon la revendication 1 ou 2, **caractérisé en ce que** le paramètre de trayon est le diamètre du trayon.

4. Procédé selon la revendication 1 ou 2, **caractérisé en ce que** le paramètre de trayon est la longueur du trayon.

5. Procédé selon l'une quelconque des revendications précédentes, **caractérisé en ce que** le paramètre de trayon est mesuré au moyen d'un dispositif de mesure de trayon.

6. Procédé selon la revendication 5, **caractérisé en ce que** le détecteur de trayon pour déterminer la position d'un trayon pendant l'étape de raccordement est le dispositif de mesure de trayon.

7. Procédé selon l'une quelconque des revendications précédentes, **caractérisé en ce que** le niveau de vide dans l'espace de trayon est mesuré pendant l'étape de tirage du lait et **en ce que** le temps d'attente est déterminé en fonction dudit niveau de vide.

8. Procédé selon l'une quelconque des revendications précédentes, **caractérisé en ce que** la quantité d'air déplacée dans l'espace de pulsation est mesurée pendant l'étape de tirage du lait, et **en ce que** le temps d'attente est déterminé en fonction de ladite quantité.

9. Procédé selon la revendication 7 ou 8, **caractérisé en ce que** la mesure a lieu pendant la phase de traite principale.

10. Procédé selon l'une quelconque des revendications 3 à 9, **caractérisé en ce que** la mesure a lieu pendant une traite précédente, et **en ce que** les données de mesure obtenues sont stockées dans une mémoire.

11. Dispositif de traite (1) équipé d'un robot (14) pour raccorder automatiquement au moins un gobelet trayeur (2) à un trayon d'un animal, lequel gobelet trayeur (2) comprend un espace de trayon pour contenir un trayon et un espace de pulsation pour appliquer un mouvement de traite au moyen d'un vide de pulsation pulsant, avec une source de vide (10) pour appliquer un vide de traite à l'espace de trayon, avec un dispositif de retrait (3) pour retirer le gobelet trayeur (2) de l'animal, avec un ordinateur (11) pour commander le dispositif, avec une horloge pour déterminer un temps d'attente afin d'activer le dispositif de retrait (3) et avec un dispositif de reconnaissance d'animal automatique pour émettre un signal de reconnaissance d'animal à l'ordinateur (11), ledit temps d'attente étant réglable, **caractérisé en ce que** le dispositif comprend un dispositif de réduction de vide pour réduire le vide de traite, **en ce que** ladite horloge détermine le temps d'attente après que le vide de traite a été réduit, **en ce que** l'on prévoit des moyens pour déterminer le temps d'attente en fonction d'un paramètre de trayon et sur la base du signal de reconnaissance d'animal.

12. Dispositif de traite (1) selon la revendication 11, **caractérisé en ce que** l'on prévoit des moyens pour déterminer sur quel trayon de l'animal, le gobelet trayeur (2) a été raccordé, et **en ce que** l'on prévoit des moyens pour déterminer le temps d'attente en fonction du trayon sur lequel le gobelet trayeur (2) a été raccordé.

13. Dispositif de traite (1) selon la revendication 11 ou 12, **caractérisé en ce que** le dispositif comprend un dispositif de mesure de trayon pour déterminer un paramètre de trayon.

14. Dispositif de traite (1) selon la revendication 13, **caractérisé en ce que** le dispositif de mesure de trayon est approprié pour déterminer le diamètre de trayon.

15. Dispositif de traite (1) selon la revendication 13, **caractérisé en ce que** le dispositif de mesure de trayon est approprié pour déterminer la longueur du trayon.

16. Dispositif de traite (1) selon la revendication 13, 14 ou 15, **caractérisé en ce que** le dispositif comprend un dispositif de mesure de position de trayon (9) pour déterminer la position d'un trayon, et **en ce que** le dispositif de mesure de trayon est le dispositif de mesure de position de trayon (9).

17. Dispositif de traite (1) selon l'une quelconque des revendications 11 à 16, **caractérisé en ce que** le dispositif comprend un capteur de vide (16) pour détecter le niveau de vide dans l'espace de trayon.

18. Dispositif de traite (1) selon l'une quelconque des revendications 11 à 17, **caractérisé en ce que** le dispositif comprend un capteur d'air (15) pour déterminer l'air déplacé dans l'espace de pulsation.

19. Dispositif de traite (1) selon l'une quelconque des revendications 11 à 18, **caractérisé en ce que** l'ordinateur (11) comprend une mémoire pour stocker des données de mesure historiques provenant du dispositif de mesure de trayon et/ou le capteur de vide (16) et/ou le capteur d'air (15).
